# EUROPÄISCHE PATENTSCHRIFT

(11) **EP 0 667 109 B1**
(45) Veröffentlichungstag und Bekanntmachung des Hinweises auf die Patenterteilung: **07.03.2001**
(21) Anmeldenummer: 94120637.7
(22) Anmeldetag: 24.12.1994
(51) Int. Cl.: A45C 11/18, B29C 45/16

(54) **Schutzhülle für Karten**
Protective case for cards
Etui de protection pour cartes

(30) Priorität: 15.02.1994 DE 9402450 U; 08.07.1994 DE 9410824 U; 15.08.1994 DE 9413093 U; 07.10.1994 DE 9416213 U
(43) Veröffentlichungstag der Anmeldung: 16.08.1995
(73) Patentinhaber: Langenbach, Klaus, D-59558 Lippstadt (DE)
(72) Erfinder: Langenbach, Klaus, D-59558 Lippstadt (DE)
(74) Vertreter: Strauss, Hans-Jochen, Dipl.-Phys., Dr.

(56) Entgegenhaltungen:
- EP-A- 0 283 594
- EP-A- 0 411 434
- WO-A-89/07219
- DE-A- 3 320 207
- DE-U- 8 316 326
- DE-U- 8 632 367
- DE-U- 9 103 928
- US-A- 4 141 400

## Beschreibung

Die Erfindung betrifft ein Verfahren zum Herstellen einer Schutzhülle für eine Automaten-. Scheck- Kredit- oder sonstige Karte, deren obere und untere Seitenplatten aus biegesteifen Kunststoffmaterial, einstückig gespritzt an drei Seiten miteinander verbunden sind, und die vierte, eine der Stirnseiten, eine Einschiebe- bzw. Entnahmeöffnung aufweist, wobei die Schutzhülle Mittel zur Erleichterung des Ausschiebens der Karte beispielsweise in Form einer Grifföffnung oder einer Daumenmulde aufweist und nach dem Spritzgießen die Schutzhülle von dem den taschenförmigen Hohlraum bildenden dünnen Kern abgestreift bzw. der den taschenförmigen Hohlraum bildende Schieber zurückgezogen werden kann, und wobei die Schutzhülle, abgesehen von der Grifföffnung bzw. der Daumenmulde sowie von vorhandenen Belüftungsöffnungen voll durchgehend ausgebildet sind; sie betrifft ferner eine Schutzhülle, hergestellt nach diesen Verfahren.

Derartige Schutzhüllen sind an sich bekannt; sie dienen der geschützten Aufbewahrung von Scheck-, Automaten-, Kredit- o.dgl. Karten, die mit Unterschriftzeile und/oder mit einem Magnetstreifen versehen sein können. Weiter sind die vorbekannten Schutzhüllen mit einem nur zu einer Stirnseite der Schutzhülle offenen Aufnahmeraum für die Karte und mit Mitteln zum Erleichtern des Ausschiebens der Karte versehen, die als Überstand der einen der Seitenplatten, als Daumenmulde in einer der Seitenplatten oder als Grifföffnung in einer der Seitenplatten ausgebildet sind. Derartige Hüllen werden aus Kunststoff hergestellt. Eine bekannte Herstellungsart besteht darin, sie zweihälftig herzustellen; beide Hälften werden nach ihrer Herstellung in einem besonderen Arbeitsgang durch Verklipsen, Verkleben, Verschweißen o.dgl. miteinander verbunden. Solche Schutzhüllen beschreiben beispielsweise das DE-GM 82 08 340 oder das US-PS 4 141 400. Dabei lehrt das DE-GM 82 08 340 bereits eine Schutzhülle die aus einem biegesteifen Kunststoffmaterial besteht, deren obere und deren untere Seitenplatte über ein Folienscharnier zu einer einstückigen Einheit verbunden sind, die ein Griffloch aufweist, wobei diese einstückige Ausbildung in Spritzgießtechnik herstellbar ist.

Um die Herstellung der Schutzhülle wirtschaftlicher zu gestalten und das Risiko des Aufgehens der zusammengefügten beiden Schutzhüllenhälften zu mindern, wurde die Schutzhülle einstückig aus biegesteifem Kunststoff gespritzt mit einem taschenförmigen Hohlraum. Dabei war jedoch die Schwierigkeit zu überwinden, den den Hohlraum formenden Kern oder den Schieber in seiner mittigen Position zu halten, um die Wandstärke der Schutzhülle über die gesamte Fläche im wesentlichen gleichförmig zu halten. Der Fachmann kannte die Probleme der Verlagerung unter der Einwirkung des den Kern umfließenden plastifizierten Kunststoffmaterials während des Einschießens und er kannte das dynamische Verhalten von Spritzgußformen mit einem Kern, wobei ihm bekannt gewesen ist, den Kern oder den Schieber mit Haltestiften zu fixieren, wobei es für ihn eine Selbstverständlichkeit war, diese Haltestifte so anzuordnen, daß der Kernschieber ordnungsgemäß in Position gehalten wurde (z.B. aus DE-PS 1 167 492, FR-PS 1 329 029). Die Anordnung von Haltestiften als Kernstützen in Spritzgußformen und die Fixierung des Kernes mit seitlich angreifenden Stützzapfen ist "tägliches Brot" des mit der Entwicklung und Bau von Spritzgußformen befaßten Fachmannes. Durch entsprechend angeordnete Haltestifte werden jedoch Öffnungen in der oberen und in der unteren Seitenplatte erzeugt, die in Interesse einer hinreichenden Qualität in Kauf genommen werden, obwohl diese über die Fläche verteilten Öffnungen der Schutzwirkung dadurch entgegenstehen, daß die Schmutzteilchen in das Innere der Schutzhülle gelangen können und dort schädlich auf die zu schützende Karte einwirken. Beispiele für derartige Schutzhüllen geben die US-PS 3 166 795, DE-OS 33 12 103, DE-OS 33 20 207 oder die EP-A- 0 121 598. Bei den nach der EP-A- 0 121 598 hergestellten Schutzhüllen wird der den Hohlraum zur Aufnahme der Karte formende Schieber statisch gestützt, er wird mittels Haltestiften in seiner Lage fixiert. Darüber hinaus ist auch eine Grifföffnung in einer der Plattenseiten vorgesehen, durch die der Schieber während des Spritzens gestützt werden kann, wobei die andere Plattenseite kleine Öffnungen im Bereich dieser Grifföffnung aufweist, durch die während des Einschießen der Kunststoffmasse Haltestifte gegen den Schieber geführt sind, die diesen gegen den die Grifföffnung formenden Vorsprung, Schieber o.dgl. drücken. Diese Grifföffnungen sind neben den Öffnungen für die Haltestifte Eintrittspforten für Teilchen, wie etwa Staubteilchen, die die Unversehrtheit der Karte in Frage stellen.

Hier setzt die Erfindung ein, der die Aufgabe zugrunde liegt, eine gattungsgemäße Schutzhülle so weiterzubilden, daß ein Eindringen von die Unversehrtheit der Karte in Frage stellenden Verunreinigungen zumindest weitgehend unterbunden wird, wobei die Herstellung einer dauerhaften Schutzhülle, in der die Karte zumindest weitgehend vor eindringenden Verunreinigungen geschützt ist, auf herkömmlichen Spritzgießmaschinen wirtschaftlich durchführbar sein soll.

Nach der Erfindung wird diese Aufgabenstellung durch die im Kennzeichen der beiden unabhängigen Ansprüche enthaltenen Merkmale gelöst; vorteilhafte Weiterbildungen und bevorzugte Ausführungsformen beschreiben die jeweiligen Unteransprüche.

Zum Spritzen einer Schutzhülle nach einer ersten Auführungsform der Erfindung wird bei einer ersten Variante im ersten Takt die erste Seitenplatte mit vollständiger Kantenrundung gespritzt und im zweiten Takt die zweite Seitenplatte in den sich ergebenden Öffnungsbereich zwischen den Kantenrundungen eingespritzt. Dabei ist durch das Taktspritzen bedingt, daß die jeweils im ersten Takt gespritzte Seitenplatte erkaltet, zumindest jedoch erstarrt ist. Beim Spritzvorgang einer Schutzhülle nach dieser Variante wird ein die vollständigen Kantenrundungen ausformender Schieber in den Formhohlraum eingeschoben, der den Aufnahmeraum für die Karte ausbildet, wobei der Schieber mit seiner dem Formhohlraum abgewandten Seite flächig an der Form anliegt, und wobei der Formhohlraum entsprechende Kantenrundungen an den Längs- und der der Schieberhalterung gegenüberliegenden Stirnseite aufweist.

Vorteilhaft wird dabei die Anlagefläche für den Schieber von einem Stempel oder einem Keil gebildet, der aufgefahren oder aufgesetzt wird, und der exakt von seiner flächigen Erstreckung die Abmessungen aufweist, die sich zwischen den Kantenrundungen des Formhohlraumes ergeben, und der einer geschlossenen Seitenplatte mit angeformter, voller Kantenrundung entspricht, wobei die Einfahrtiefe des Keils oder des Stempels dabei exakt der Seitenwandstärke der Seitenplatte entspricht. Beim Spritzgießen wird dieser Formhohlraum mit dem plastifizierten Material gefüllt, wobei der Stempel oder Keil den Schieber während des Spritzvorganges rückseitig abstützt. Nach dem ersten Takt ist der Formhohlraum gefüllt, der Stempel bzw. Keil wird entsprechend der Seitenwandstärke gehoben und die zweite Seitenplatte wird zwischen Schieber und Stempel bzw. Keil und die begrenzenden Kantenumrandung des im ersten Takt gespritzten, zwischenzeitlich erstarrten Materials eingespritzt, auf dem sich der Schieber während des zweiten Taktes abstützt. Wird nach dieser Ausbildung das Kunststoffmaterial unter hohem Druck stehend in den Formhohlraum eingespritzt, behält der Schieber aufgrund des vom eingefahrenen Keil oder Stempel gebildeten, stützenden Widerlagers seine stabile Lage, die auch im zweiten Takt erhalten bleibt, weil beim Aufspritzen der schließenden Seitenplatte die zuerst gespritzte Seitenplatte mit den vollen Kantenrundungen aufgrund des Erstarrungsprozesses der darunter liegenden Seitenplatte, der durch eine vorgesehene Kühlung in der Form beschleunigt werden kann, den Schieber mit satter Anlage aufnehmen
bzw. halten kann, so daß ein Flattern oder Wandern des Schiebers im Formhohlraum unterbunden ist. Nach dem Spritzvorgang erstarrt die plastifizierte Masse, der Schieber wird zurückgezogen und die Schutzhülle von der Form ausgeworfen. Bei Schutzhüllen, die nach dieser zweiten Ausbildung des Spritzgießens hergestellt werden, ist die Stirnseite geschlossen.

Bei einer zweiten Variante werden die beiden Seitenplatten so gespritzt, daß sie jeweils eine Hälfte der Kantenrundung umfassen; beim zweiten Takt wird so die zweite Seitenplatte mit ihrer Kantenrundung an die erste Seitenplatte angespritzt. Nach diesem Spritzverfahren wird zunächst eine der Seitenplatten mit den Halbkant-Rundungen in eine Form gespritzt, die dann um einen bestimmten Betrag gedreht oder verschwenkt wird, um dann mit einer entsprechenden spiegelsymmetrischen Gegenform die schließende Gegen-Seitenplatte anzuspritzen. Bei der Verarbeitung von Kunststoffen mit unterschiedlichen Farben bzw. von unterschiedlichen Materialien verläuft die Trennschicht in der Mitte der Kantenrundung.

Hier können identische Teilformen vorgesehen werden. Bei einer vorteilhaften Weiterbildung ist ein Schieber vorgesehen, der der vollen Höhe des Aufnahmeraumes entspricht. Dieser Schieber ist im ersten Takt gegen die Form selbst abgestützt und überragt die hier vorgesehene halbe Kantenrundung. Die Anlage für den Schieber wird dabei von einem Stempel oder einem Keil gebildet, der beim ersten Takt eingefahren ist, und der zum Spritzen der zweiten Seitenplatte im zweiten Takt um exakt eine Wandstärke einer Seitenplatte zurückgezogen wird, so daß nun die zweite Seitenplatte so gespritzt werden kann, daß sie mit ihrer halben Kantenrundung an die zuerst gespritzte Seitenplatte anschließt, wobei es sich von selbst versteht, daß Form und Stempel bzw. Keil so gebildet sind, daß die Kanten-rundung der zweiten Seitenplatte gebildet werden kann. Bei zurückgefahrenem Stempel bzw. Keil wird nun die zweite Seitenplatte an die erkaltete, zumindest erstarrte erste Seitenplatte angespritzt.

Das Schließen der Schutzhülle im zweiten Takt kann dabei durch einen zweiten Einspritzkanal erfolgen, wobei dann in vorteilhafter Weise ein Material mit einer anderen Farbe eingespritzt werden kann. Dadurch ist es möglich geworden, daß jeweils die Seitenplatten in unterschiedlichen Farben oder Materialien gespritzt werden können, so daß die Seitenplatten entweder einfarbig oder in unterschiedlichen Farben oder auch mit unterschiedlicher, vom Material bedingten Struktur zu einer einstückigen Schutzhülle gespritzt werden können. Mit der ersten Variante des Schutzhüllen-Spritzgießens wird die zwischen die vollen Kantenrundungen der im ersten Takt gespritzten Seitenplatte im zweiten Takt eingespritzten Seitenplatte in der zweiten Farbe eingespritzt, so daß die Farb- oder Strukturgrenzen in der Seitenplatte verlaufen und sich ein farbig oder strukturmäßig abgesetztes Feld ergibt. Bei der anderen Variante entstehen zwei Seitenplatten unterschiedlicher Farbe oder Struktur, wobei die Farb- bzw. Strukturgrenzlinie in der Mitte der Kanten-Rundung verläuft.

Eine zweite Ausführungsform der Erfindung ist dadurch gegeben, daß die Schutzhülle einstückig aus biegesteifem Kunststoffmaterial gespritzt ist, als Aufnahmetasche für die Karte, wobei die untere Seitenplatte und die obere Seitenplatte voll durchgehend geschlossen ausgebildet sind. Dabei wird das einströmende plastifizierte Kunststoffmaterial beim Einströmen so gelenkt, daß im Bereich des Anspritzpunktes eine gegenüber der Längsrichtung der Schutzhülle schrägliegende Innenfläche ausgebildet ist, mit einer Steigung gegenüber der Längsrichtung der Schutzhülle von mindestens 5° und höchstens 14°, wobei die Steigung derart ausgebildet ist, daß sie zur geschlossenen Seitenkante der Schutzhülle gerichtet ist. Diese Schrägfläche entsteht durch ein Lenken der Strömung des plastifizierten Kunststoffmaterials so, daß der Schieber dynamisch gestützt ist.

Als Mittel zur Erleichterung der Kartenentnahme sind bereits vorgeschlagen worden, daß in einer oder in beiden der Seitenwände längliche Grifföffnungen vorgesehen sind, die mit ihrer langen Achse in Richtung auf die Einsteck- und Entnahmeöffnung ausgerichtet sind; weiter ist bekannt, mindestens eine Daumenmulde im Bereich der Einsteck- und Entnahmeöffnung vorzusehen, die so angeordnet ist, daß die eingesteckte Karte soweit ausgeschoben werden kann, daß ein Erfassen zur Entnahme möglich wird. In einer anderen Ausbildung ist diese Daumenmulde in einer oder in beiden der Seitenplatten, unmittelbar an der geschlossenen Seitenkante vorgesehen, wobei, sofern in beiden Seitenplatten angeordnet, die eine diese übergreift. Mit dieser Ausbildung wird ein "Ausdrücken" der eingeschobenen Karte ermöglicht, so daß die Karte im Bereich der Einschub- und Entnahmeöffnung gefaßt und endgültig entnommen werden kann. In einer vorteilhaften Ausführungsform ist eine der Seitenplatten kürzer gehalten als die andere, die damit einen Überstand aufweist. Dadurch wird das Entnehmen der Karte erleichtert, da der Randbereich der eingeschobenen Karte frei liegt; analog dazu wird auch das Einschieben der Karte begünstigt, da der vorangehende Randbereich der Karte vom Überstand geführt in die taschenähnliche Aufnahme geführt wird. Dabei versteht es sich von selbst, daß auch eine Verkürzung beider Seitenplatten zu diesem Ergebnis führt.

Zum Spritzen einer Schutzhülle nach der zweiten Ausführungsform mit dynamisch gestütztem Schieber wird die Strömung so gelenkt, daß sie auf der Seite der geschlossenen Seitenplatte gegenüber der Strömung auf der Seite der mit der Grifföffnung, der Daumenmulde oder dem Überstand versehenen Seitenplatte voreilt und einen Gegendruck aufbaut, der den Kern bzw. den Schieber gegen die die Grifföffnung, Daumenmulde bzw. Überstand bildenden Seitenschieber drückt, was sowohl durch die Ausbildung der angeströmten Kante des Kernes bzw. Schiebers als auch durch Wahl von Lage, Richtung und/oder Zahl des/der Anspritzpunktes/-punkte oder auch der Einspritzrichtung erreicht werden. Die durch diese Ausbildung entstehende, schrägliegende Fläche füllt dabei zumindest einen Teil, was hinreichend, jedoch nicht notwendig ist: Ausreichend ist, wenn ein Teil der Breite ausgefüllt wird, der ausreicht, um die Strömung gleichmäßig um den die Einschiebetasche bildenden Schieber so zu lenken, daß die Strömungsfront auf der der geschlossenen Seitenplatte zugeordneten Seite des Schiebers den Bereich des die Grifföffnung oder Daumenmulde bildenden Seitenschiebers oder Ausformung der Spitzgußform so erreicht, dass sich ein Gegendruck aufbauen kann, der ein Abheben dieses Seitenschiebers von dem den taschenförmigen Hohlraum bildenden Kern bzw. Schieber verhindert.

Vorteilhaft weist die der Einschuböffnung gegenüberliegend angeordnete, geschlossene Seitenkante der Schutzhülle neben dem mittig in ihr vorgesehenen Anspritzpunkt und nahe bei diesem mindestens eine, vorzugsweise zwei Öffnungen auf, durch die beim Auswerfen vom Kern oder beim Ziehen des Schiebers Luft in den Hohlraum nachströmt, wie im Grundsatz aus DE-GM 1 870 769 bekannt. Vorteilhaft liegen diese Öffnungen symmetrisch zu dem Anspritzpunkt. Alternativ weist bei Doppelanspritzung die der Einschuböffnung gegenüberliegend angeordnete, geschlossene Seitenkante der Schutzhülle zwischen den benachbart liegend angeordneten Anspritzpunkten eine Öffnung auf, durch die beim Abstreifen Luft in den Hohlraum einströmt und eine das Auswerfen bzw. Abstreifen erschwerende Vakuumbildung unterbunden wird; die nachströmende Luft bricht das Vakuum, wobei die Geschwindigkeit des Nachströmens von Öffnungsquerschnitt und Zuströmwegen gegeben ist. Zur Bildung dieser Öffnungen weist der Schieber an der freien Stirnseite Fortsätze auf, die vorteilhaft in in der Form korrspondierend vorgesehene Halteöffnungen eingeführt werden. Damit ist der Schieber während des Einschießens der plastifizierten Kunststoffmasse so gestützt, daß er nicht flattert und bedingt durch seine stirnseitigen Haltefortsätze seine stabile Lage beibehält, ungeachtet der durch den hohen Einspritzdruckes des Materials bedingten Strömungsverhältnisse. und ungeachtet seiner im Verhältnis großen Fläche bezogen auf die verhältnismäßig kleine Schieberdicke; bei so hergestellten Schutzhüllen bleiben stirnseitig diese Öffnungen zurück.

Zweckmäßig ist es, wenn der taschenförmige Hohlraum der Schutzhülle sich in Einschieberichtung der Karte geringfügig verengend, keilförmig ausgebildet ist, so daß die innere Weite nahe dem geschlossenen Ende geringer ist als die nahe dem mit der Einschuböffnung versehenen Ende. Durch diese keilförmige Ausbildung löst sich die Innenwandung von oberer und unterer Seitenplatte beim Auswerfen aus der Form bzw. beim Zurückziehen des Schiebers schnell von Kern bzw. Schieber, es wird ein weiterer Weg geschaffen, der sich mit Beginn des Auswerfens bzw. Ziehens öffnet und ein Nachströmen von Luft ermöglicht, die der Unterdruckbildung beim Entformen entgegenwirkt.

Diese keilförmige Ausbildung wird dabei vorteilhaft angeordnet, daß sie zu einem auf der Karte vorgesehenen Magnetstreifen korrespondiert, wobei dies selbstverständlich analog auch für Karten gilt, die einen Chip enthalten, dessen Kontaktflächen auf einer Seitenplatte angeordnet sind. Der Kern bzw. der Schieber weist dazu in diesem Bereich eine erhabene Ausformung auf. die in der oberen oder in der unteren Seitenplatte die kanalartige Vertiefung bildet, wobei diese erhabene Ausformung die gewünschte Keilform aufweist. Dadurch bildet der keilförmige Bereich einen von der Innenwandung abgesetzten und gegenüber diesen vertieft liegenden Schutzkanal für einen vorhandenen Magnetstreifen, wobei es sich von selbst versteht, daß auch zwei oder mehr derartige Schutzkanäle, entsprechend den von der Karte her gegebenen Verhältnissen vorgesehen sein können. Dabei wird - in vorteilhafter Weiterbildung- die Keilform so ausgebildet, daß der vorausgehende Rand der eingeschobenen Karte von dem hinteren Ende des Schutzkanals klemmend erfaßt wird. Alternativ dazu kann der Schieber derart ausgebildet sein, daß diese Schutzkanäle durch Stege gebildet werden. Bei dieser Ausführungsform weist der taschenförmige Hohlraum der Schutzhülle zumindest in einem parallel zur Einschieberichtung der Karte erstreckten Bereich zur Bildung eines Schutzkanals Stege auf. Dabei sind diese von den zusätzlichen, keilförmigen Ausformungen bzw. von diesen Stegen gebildeten Schutzkanäle so angeordnet, daß sie in den den Magnetstreifenbereichen der zu schützenden Karte zugeordneten Bereichen liegen. Darüber hinaus wird durch diese Ausbildung die eingeschobene Karte in eingeschobener Position klemmend fixiert und sicher gehalten.

Zur Verbesserung dieser Fixierung der Karte ist es vorteilhaft, wenn zumindest eine der Seitenplatten eine in den taschenförmigen Hohlraum der Schutzhülle ragende, sich in Einschubrichtung erstreckende Nase aufweist, deren Erstreckung in Längsrichtung klein ist gegenüber der Längserstreckung der Hülle, und deren Breite klein ist gegenüber ihrer Längserstreckung. Um diese Nase/Nasen im Bereich des geschlossenen Hüllen-Endes zu bilden, weist der Kern oder Schieber im Bereich seiner freien Kante eine kurze Vertiefung auf, die in der Schutzhülle eine Nase bildet. Dabei versteht es sich von selbst, daß diese Nase eine Längserstreckung in Bewegungsrichtung des Kerns oder Schiebers aufweist, wobei die Länge dieser Längserstreckung klein ist gegenüber der Länge der Schutzhülle. Die Breite dieser Nase ist dabei nicht von Bedeutung, jedenfalls ist eine derartige Nase schmal gegenüber ihrer Längserstreckung.

Mit dieser Ausbildung wird eine Schutzhülle erreicht, die frei ist von den durch die Haltestifte bedingten Öffnungen in den vorwiegend randnahen Bereichen der Seitenplatten, die für das Eindringen von Schmutzteilchen prädestiniert sind. Eine derartige Schutzhülle bildet die nach dem Stand der Technik bekannte entscheidend weiter, da die so ausgestaltete Schutzhülle frei von unerwünschten Öffnungen ist und somit gegen ein Eindringen von Schmutzteilchen in erhöhtem Maße geschützt ist. Durch die Ausbildung in sich verengender Form wird weiter erreicht, daß für die Schutzhülle beim Abstreifen von feststehendem Kern oder beim Ziehen des Schiebers ein kurzer Weg ausreicht, um den sich beim Entformen bildenden Hohlraum der Schutzhülle zu belüften um einer Vakuumbildung vorzubeugen und das Entformen zu erleichtern. Schließlich eignen sich die glatten und geschlossenen Seitenflächen der Schutzhülle wesentlich besser als Werbeträger.

Das Wesen der Erfindung wird an Hand des in den Figuren 1 bis 8 dargestellten Ausführungsbeispielen näher erläutert; dabei zeigen
- Fig. 01:: Schutzhülle, perspektivische Schema-Ansicht,
- Fig. 02:: Schutzhülle, Aufsicht;
- Fig. 03:: Schutzhülle, Ansicht des geschlossenen Endes, Fig. 3a: Ein Anspritzpunkt. Fig. 3b: Zwei Anspritzpunkte
- Fig. 04:: Schutzhülle im Schnitt gemäß IV-IV (Fig. 2).
- Fig. 05:: Schutzhülle mit Seitenplatte. Aufsicht;
- Fig. 06:: Schutzhülle mit Seitenplatte, Schutzkanäle und Nasen angedeutet, Aufsicht;
- Fig. 07:: Geschlossene Stirnseite der Schutzhülle, Ansicht;
- Fig. 08:: Stirnseite mit Einschub- bzw. Entnahmeöffnung, Ansicht.

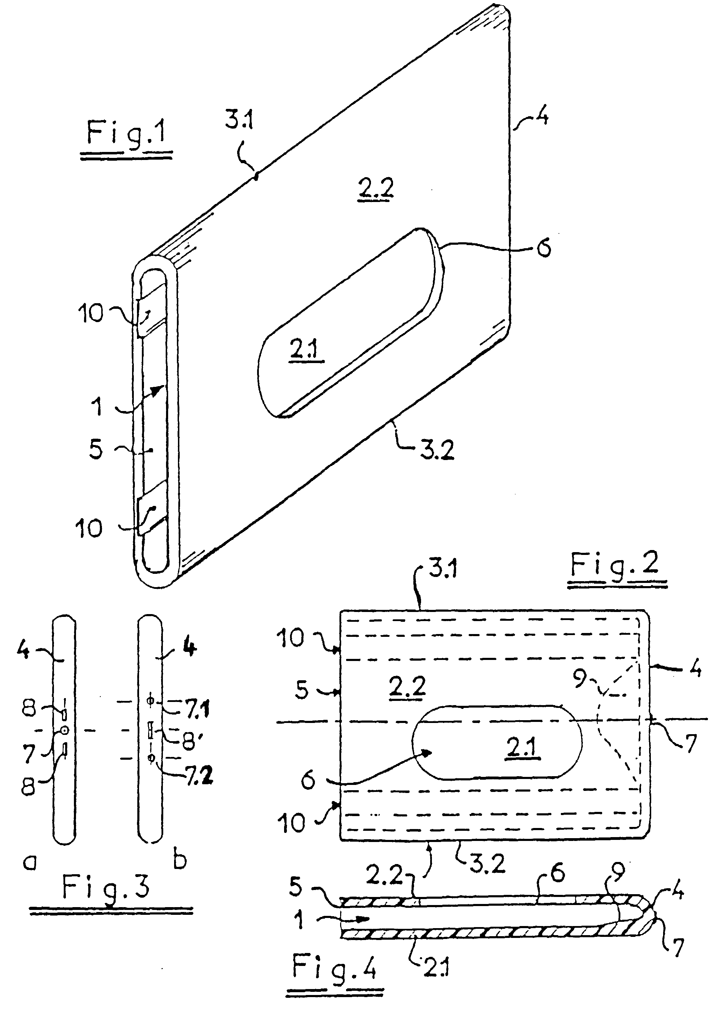

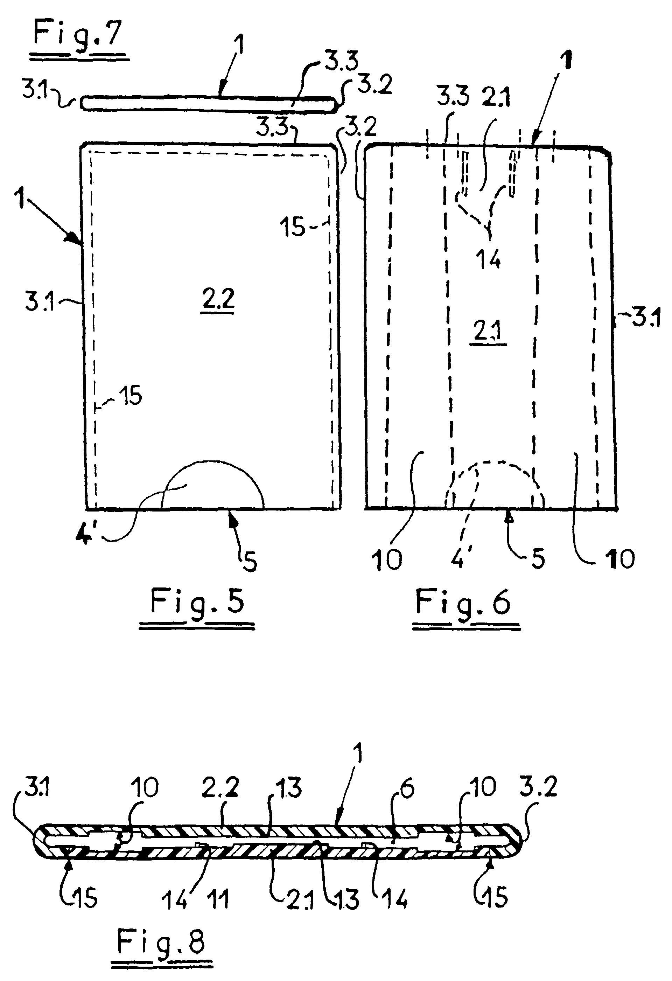

Die Schutzhülle 1 besteht, wie die Figuren 1 und 2 zeigen. aus einer unteren Seitenplatte 2.1 und einer oberen Seitenplatte 2.2, wobei eine der Seitenplatten -in der Darstellung die obere Seitenplatte 2.2-eine Grifföffnung 4 (an deren Stelle auch eine Daumenmulde 4' (Fig. 5. 6) an der Einschub- und Entnahmeöffnung 5 der offenen Seitenkante vorgesehen sein kann) aufweist. Beide Seitenplatten 2.1 und 2.2 sind an den Längs-Seitenkanten 3.1 und 3.2 sowie an der rückwärtigen Seitenkante 3.3 einstückig ausgeführt, während die vierte Seitenkante eine Einschub- und Entnahmeöffnung 5 bildet. Diese so verbundenen Seitenplatten 2.1 und 2.2 schließen den taschenförmigen Hohlraum 6 ein, in den eine (nicht näher dargestellte) aufzubewahrende Karte eingeschoben werden kann, und aus dem diese eingeschobene Karte auch wieder entnommen werden kann, wozu die Grifföffnung 4, die als sich in Einschieberichtung erstreckendes Langloch ausgebildet ist, (oder die Daumenmulden, oder ein einseitiger Überstand einer der Seitenplatten) dient.

Die in den Figuren 3 dargestellte, geschlossene Rückseite der Schutzhülle 1 wird von der Seitenkante 3.3 gebildet, die auf ihrem Scheitel und in ihrer Mitte den Anspritzpunkt 7 (Fig. 3a) bzw. zwei symmetrisch zu ihrer Mitte angeordnete Anspritzpunkte 7.1 und 7.2 (Fig. 3b) aufweist. Neben dem Einfach-Anspritzpunkt 7 sind zwei Belüftungsund Halteöffnungen 8 angeordnet (Fig. 3a); sind zwei symmetrisch zur Mitte liegende Anspritzpunkte 7.1 und 7.2 vorgesehen, befindet sich eine Belüftungs- und Halteöffnung 8' mittig zwischen diesen beiden Anspritzpunkten. Bei einem Spritzen der Schutzhülle 1 mit einer feststehende Kerne enthaltenden Form können diese Belüftungs- und Halteöffnungen auch entfallen, da der die fertig gespritzte Schutzhülle 1 vom Kern abziehende Abstreifer erst nach Öffnen der Form wirkt und so zumindest das Äußere der Schutzhülle bereits von kühlender Umgebungsluft umflossen wird. Diese dienen darüber hinaus auch zur Stützung eines (nicht näher dargestellten) Schiebers. Zur Bildung dieser Belüftungs- und Halteöffnungen 8 bzw. 8' weist der Schieber einen oder zwei Fortsätze auf, die in entsprechende Aufnahmen in der Form eingreifen, und mit denen er während des Einspritzvorganges lagestabil gehaltet wird.

Die Figur 4 zeigt einen Schnitt durch die Schutzhülle 1, entsprechend der Schnittlinie IV-IV (Fig. 2). Hier sind die beiden geschnittenen Seitenplatten 2.1 und 2.2 zu erkennen, wobei das Griffloch 4 (an dessen Stelle die Daumenmulde treten kann) als in der oberen Seitenplatte 2.2 vorgesehen dargestellt ist. Im Bereich des (hier einfachen) Anspritzpunktes 7 befindet sich eine innere Schrägfläche 9. Diese schrägliegende Fläche 9 entsteht beim Spritzen dadurch, daß das plastifizierte Kunststoffmaterial in Richtung der voll geschlossenen unteren Seitenplatte 2.1 gelenkt wird; dabei versteht es sich von selbst, daß diese Schrägfläche 9 auch bei Doppel-Anspritzung entsprechend vorgesehen wird. Diese Schrägfläche 9 ist dabei so ausgebildet, daß sie zum Klemmen der eingeschobenen Karte beiträgt, ggf. im Zusammenwirken mit den Schutzkanälen 10. Es können auch sich in Bewegungsrichtung des Kerns oder Schiebers verlaufende Nasen 11 vorgesehen sein, wie im Zusammenhang mit Figur 6 näher erläutert wird.

Die Figuren 5 und 6 zeigen eine Schutzhülle 1 aus biegesteifem Kunststoffmaterial für eine nicht näher dargestellte Automaten-, Scheck-, Kredit- oder sonstige Karte. Dabei sind entsprechend der Figuren 5 und 6 jeweils die die eingeschobene Karte schützenden Seitenplatten 2.1 und 2.2 der einstückig gespritzten Schutzhülle 1 in der Auf- und in der Unteransicht dargestellt. Jeweils im Bereich der vorderen Einschub- bzw. Entnahmeöffnung 5 sind entweder an der unteren oder der oberen Seitenplatte 2.1 bzw. 2.2 Daumenmulden 4' angeordnet, um die eingeschobene Karte besser aus der Schutzhülle 1 entnehmen zu können. Die Seitenplatten 2.1 und 2.2 erstrecken sich bis an die geschlossen ausgebildeten Seitenkanten 3.1, 3.2 und 3.3, so daß eine in die Schutzhülle 1 eingeschobene, nicht näher dargestellte Karte im durch die Seitenplatten 2.1 und 2.2 gebildeten, geschlossenen Hohlraum vor eindringendem Schmutz geschützt ist. Dabei sind die Seitenplatten 2.1 und 2.2 entweder einfarbig oder in unterschiedlichen Farben ausgeführt, so daß die einstückige Schutzhülle 1 unifarben oder zweifarbig spritzbar ist.

In Weiterbildung der Erfindung ist bei der Spritzherstellung der Schutzhülle 1 auf einer Mehrfarben-Spritzgußmaschine die der Einschub- bzw. Entnahmeöffnung 5 gegenüberliegende, rückwärtige Stirnseite 3.3 geschlossen ausgebildet. Dabei werden nach dem Mehrfarben-Spritzgußverfahren die Seitenplatten 2.1 und 2.2 jeweils zeitlich versetzt getrennt gespritzt, wobei die Seitenplatte 2.1 zunächst leicht erstarrt, bevor dann die deckende Seitenplatte 2.2 angespritzt wird. Dabei wird zunächst die Seitenplatte 2.1 mit den Seitenkanten 3.1, 3.2 und 3.3 gespritzt, deren Kantenrundungen jeweils an die Seitenplatten 2.1 und 2.2 anschließen; die sich damit ergebenden Grenzen 15 sind in der Figur 5 gestrichelt angedeutet. In diesem sich so ergebenden Öffnungsbereich zwischen den Kantenrundungen wird dann die gegenüberliegende Seitenplatte 2.2 angespritzt, die somit diesen Öffnungsbereich ausfüllt, so daß eine einstückige Schutzhülle 1 entsteht. Dabei können die Seitenplatten 2.1 oder 2.2 in jeweils unterschiedlichen Farben gespritzt werden.

Nach einer weiteren Variante der Spritzherstellung der Schutzhülle 1 auf einer Mehrfarbenspritzmaschine werden die nacheinander gespritzten Seitenplatten 2.1 und 2.2 jeweils mit Halbkant-Rundungen versehen, wobei die Farb- bzw. Materialgrenzlinie in der Mitte der Kanten-rundung verläuft. Nach diesem Verfahren wird zunächst eine der Seitenplatten 2.1 oder 2.2 mit der halben Kantenrundung in eine Form gespritzt, die dann um einen bestimmten Betrag verschwenkt oder gedreht wird, um mit einer entsprechenden spiegelsymmetrischen Gegenform die schließende Gegen-Seitenplatte 2.1 oder 2.2 aufzuspritzen, die sich dann mit ihrer Halbkant-Rundung an die Halbkant-Rundung der zuerst gespritzen Seitenplatte anlegt. Bei der Verarbeitung von unterschiedlichen Kunststoffarben bzw. unterschiedlichen Materialien verläuft die Trennschicht in der Rundungsmitte der Kantenrundung.

Nach einer vorteilhaften Weiterbildung der Erfindung weist der taschenförmige Hohlraum der Schutzhülle 1 zumindest in einem parallel zur Einschieberichtung der Karte angeformte Bereiche 13 auf, die entweder an einer oder an beiden Seitenplatten 2.1 und/oder 2.2 zur Bildung eines Schutzkanals 10 für den Magnetstreifen der Karte vorgesehen sind. Diese Bereiche 13 sind zur Einschubrichtung leicht konisch zunehmend ausgebildet, so daß der eingeschobenen Kartenrand klemmend erfaßt wird, die dadurch noch verstärkt ausgebildet sein können, wenn am ausgeformten Bereich 13 ein Klemmpunkt 14 zusätzlich angeformt ist. Es können auch sich in Bewegungsrichtung des Kerns oder Schiebers (die mit der Einschubrichtung übereinstimmt) verlaufende Nasen 11 vorgesehen sein, deren Längserstreckung klein gegenüber der Längserstreckung der Schutzhülle 1 ist (im Ausführungsbeispiel bleibt die Längserstreckung der Nase unter 10% der Längserstreckung der Hülle). Diese Nasen sind im Inneren der Schutzhülle vorteilhaft im Bereich ihres geschlossenen Endes symmetrisch zur Mittelebene vorgesehen, beidseits der die Magnetstreifen aufnehmenden Kanälen 10; sie unterstützen die Klemmwirkung der angeformten Bereiche und fixieren die eingeschobene Karte. Es erscheint selbstverständlich, daß diese Nase auch einzeln vorgesehen sein kann, sie wird dann bevorzugt mittig anzuordnen sein; es versteht sich weiter von selbst, daß diese Nase/Nasen auch im Bereich der Einschub- bzw. Entnahmeöffnung angeordnet sein kann/können.

## Patentansprüche

1. Verfahren zum Herstellen einer Schutzhülle für eine Automaten-, Scheck- Kredit- oder sonstige Karte, deren obere und untere Seitenplatten aus biegesteifem Kunststoffmaterial, einstückig gespritzt an drei Seiten miteinander verbunden sind, und die vierte, eine der Stirnseiten, eine Einschiebe- bzw. Entnahmeöffnung aufweist, wobei die Schutzhülle Mittel zur Erleichterung des Ausschiebens der Karte beispielsweise in Form einer Grifföffnung oder einer Daumenmulde aufweist und nach dem Spritzgiessen die Schutzhülle von dem den taschenförmigen Hohlraum bildenden dünnen Kern abgestreift bzw. der den taschenförmigen Hohlraum bildenden Schieber zurückgezogen werden kann, und wobei die Schutzhülle, abgesehen von der Grifföffnung bzw. der Daumenmulde sowie von vorhandenen Belüftungsöffnungen voll durchgehend ausgebildet sind, **dadurch gekennzeichnet**, dass die Seitenplatten (2.1, 2.2) bis in die Seitenkantenbereiche voll durchgehend aus dem Kunststoff in zeitlicher Versetzung so gespritzt werden, dass im ersten Takt zunächst eine der Seitenplatten mit einem Öffnungsbereich, und in einem zweiten Takt die gegenüberliegende Seitenplatte in diesen Öffnungsbereich hinein gespritzt werden, wobei die im Bereich der miteinander verbundenen Kantenbereiche der aneinander grenzenden Seitenplatten (2.1, 2.2) die einstückig gespritzte Schutzhülle (1) bilden.

2. Verfahren nach Anspruch 1, **dadurch gekennzeichnet**, dass bei Spritzguss-Herstellung der Schutzhülle (1) auf einer Mehrfarben-Spritzgussmaschine die der Auf- bzw. Entnahmeöffnung (5) gegenüberliegende Stirnseite (3.3) geschlossen ausgebildet ist, wobei die Seitenplatten (2.1, 2.2) entweder einfarbig oder in unterschiedlichen Farben zu der einstükkigen Schutzhülle (1) gespritzt sind.

3. Schutzhülle, einstückig aus Kunststoff gespritzt nach dem Verfahren gemäß Anspruch 1 oder 2, **dadurch gekennzeichnet**, dass jeweils die Seitenplatten (2.1; 2.2) in unterschiedlichen Farben oder Materialien gespritzt sind, wobei die Farb- bzw. Materialgrenzlinie (15) in der Grenze des Öffnungsbereichs verläuft, wobei eine der Seitenplatten (2.1; 2.2) ein halbe Kantenrundung der geschlossenen Kanten (3.1, 3.2. 3.3) aufweist, während die gegenüberliegende der Seitenplatten (2.1; 2.2) den sich zwischen den Kantenrundungen ergebenden, von einer Grenze (15) begrenzten Öffnungsbereich ausfüllt.

4. Schutzhülle, einstückig aus Kunststoff gespritzt nach dem Verfahren gemäß Anspruch 1 oder 2, **dadurch gekennzeichnet,** dass jeweils die Seitenplatten (2.1; 2.2) in unterschiedlichen Farben oder Materialien gespritzt sind, wobei die Farb- bzw. Materialgrenzlinie (15) in der Grenze des Öffnungsbereichs verläuft, wobei eine der Seitenplatten (2.1; 2.2) ein volle Kantenrundung der geschlossenen Kanten (3.1. 3.2, 3.3) aufweist, während die gegenüberliegende der Seitenplatten (2.1; 2.2) den sich zwischen den Kantenrundungen ergebenden, von einer Grenze (15) begrenzten Öffnungsbereich ausfüllt.

5. Verfahren zum Herstellen einer Schutzhülle für eine Automaten-, Scheck- Kredit- oder sonstige Karte, deren obere und untere Seitenplatten aus biegesteifem Kunststoffmaterial, einstückig gespritzt an drei Seiten miteinander verbunden sind, und die vierte, eine der Stirnseiten, eine Einschiebe- bzw. Entnahmeöffnung aufweist, wobei die Schutzhülle Mittel zur Erleichterung des Ausschiebens der Karte beispielsweise in Form einer Grifföffnung oder einer Daumenmulde aufweist und nach dem Spritzgiessen die Schutzhülle von dem den taschenförmigen Hohlraum bildenden dünnen Kern abgestreift bzw. der den taschenförmigen Hohlraum bildenden Schieber zurückgezogen werden kann, und wobei die Schutzhülle, abgesehen von der Grifföffnung bzw. der Daumenmulde sowie von vorhandenen Belüftungsöffnungen voll durchgehend ausgebildet sind, **dadurch gekennzeichnet**, dass die untere und die obere Seitenplatte (2.1, 2.2) der Schutzhülle (1) bis in die Seitenkantenbereiche voll durchgehend aus dem Kunststoff zeitgleich so gespritzt werden, dass die einfliessende Kuststoffmasse den den Hohlraum bildenden Kern symmetrisch umfliesst und die aneinander grenzenden Seitenplatten (2.1, 2.2) die einstückig gespritzte Schutzhülle (1) bilden, wobei der bzw. die Anspritzpunkt/-e (7; 7') auf dem Scheitel der der Einschub- und Entnahmeöffnung (5) gegenüberliegenden geschlossenen Seitenkante (3.3) in deren Mitte liegt bzw. symmetrisch dazu liegen.

6. Schutzhülle, einstückig aus Kunststoff gespritzt nach den Verfahren gemäss Anspruch 5, **dadurch gekennzeichnet**, dass der taschenförmige Hohlraum (6) der Schutzhülle (1) im Bereich des/der Anspritzpunktes/-te (7; 7') so angelegt ist, dass die Strömung so gelenkt ist, dass sie einen Gegendruck aufbauend, den Kern bzw. den Schieber dynamisch stützt, wodurch eine gegenüber der Längsrichtung der Schutzhülle schräg liegende Innenfläche (9) ausgebildet ist, deren Steigung mindestens 5°, höchstens 14° beträgt und derart ist, dass die Schrägfläche (9) zu einer der Seitenplatten (2.1) hin geneigt, die eingeschobene Karte klemmend fixiert.

7. Schutzhülle nach einem der Ansprüche 3 oder 4 bzw 6, **dadurch gekennzeichnet**, dass der taschenförmige Hohlraum (6) der Schutzhülle (1) zumindest einen parallel zur Einschieberichtung der Karte angeformten Bereich (15), entweder an einer oder an beiden Seitenplatten (2.1, 2.2), zur Bildung eines Schutzkanals (10) für den Magnet- oder Unterschriftenstreifen der Karte aufweist, vorzugsweise in Form einer gegenüber der zum Entformen notwendigen Keilform geringfügigen Zusatz-Keilform.

8. Schutzhülle nach Anspruch 7, **dadurch gekennzeichnet**, dass der keilförmige Bereich (15) zum auf der Karte vorgesehenen Magnetstreifen oder Unterschriftzeile korrespondierend angeordnet ist.

9. Schutzhülle nach Anspruch 7 oder 8, **dadurch gekennzeichnet**, dass der durch mindestens einen keilförmigen Bereich (15) gebildete Schutzkanal (10) derart ausgebildet ist, dass der vorausgehende Rand der eingeschobenen Karte klemmend erfassbar ist.

10. Schutzhülle nach einem der Ansprüche 3 oder 4 bzw. 6 bis 9, **dadurch gekennzeichnet**, dass zumindest eine der Seitenplatten (2.1; 2.2) eine in den taschenförmigen Hohlraum (6) der Schutzhülle (1) ragende, sich in Einschubrichtung erstreckende Nase (14) aufweist, deren Erstreckung in Längsrichtung klein ist gegenüber der Längserstreckung der Schutzhülle (1). und deren Breite klein ist gegenüber ihrer Längserstreckung.

11. Schutzhülle nach Anspruch 10, **dadurch gekennzeichnet**, dass diese Nase/-sen (14) im Bereich des geschlossenen Endes der Schutzhülle (1) vorgesehen ist/sind.

12. Schutzhülle nach Anspruch 10, **dadurch gekennzeichnet**, dass diese Nase/-sen (14) im Bereich des offenen, mit der Einschub-/Entnahmeöffnung (5) versehenen Endes der Schutzhülle (1) vorgesehen ist/sind.

13. Schutzhülle nach Anspruch 10, 11 oder 12, **dadurch gekennzeichnet**, dass die einfach vorgesehene Nase (11) mittig bzw. die doppelt vorgesehenen Nasen (11) symmetrisch zur Mitte im Inneren des taschenförmigen Hohlraumes (6) angeordnet ist/sind.

14. Schutzhülle nach einem der Ansprüche 10 bis 13, **dadurch gekennzeichnet**, dass die Höhe der Nase (11) über der Innenfläche der mit der Nase (11) versehenen Seitenplatte (2.1; 2.2) in Einschubrichtung so ansteigt, dass die Klemmung der eingeführten Karte progressiv zunimmt.

## Claims

1. Process for manufacturing a protective case for a vending machine card, cheque card, credit card or other card, of which the upper and lower side panels made of rigid plastic material are integrally injection-moulded and joined together on three sides, and the fourth side, one of the ends, has an insertion and withdrawal opening, the protective case having means to facilitate sliding the card out, e.g. in the form of a gripping opening or a thumb indentation and with the protective case being able to be stripped from the thin core forming the pocket-shaped cavity or the slider forming the pocket-shaped cavity being able to be withdrawn after the injection moulding operation, and the protective case being of fully continuous construction apart from the gripping opening or the thumb indentation as well as any ventilation holes present, characterised in that the side panels (2.1, 2.2) are fully continuously injection-moulded from the plastic right into the side edge zones at staggered times in such a way that in the first, cycle firstly one of the side panels with an opening region is moulded, and in a second cycle the opposing side panel is injected into this opening region, with the side panels (2.1, 2.2) adjoining one another in the region of the joined edge regions forming the integrally injection-moulded protective case (1).

2. Process as claimed in Claim 1, characterised in that in manufacturing the protective case (1) by injection moulding on a multicolour injection moulding machine, the end face (3.3) lying opposite the receiving and withdrawal opening (5) is closed, with the side panels (2.1, 2.2) being injection-moulded either in one colour or in different colours to form the integral protective case (1).

3. Protective case, integrally injection-moulded in plastic by the process claimed in Claim 1 or 2, characterised in that each of the side panels (2.1, 2.2) is injection-moulded in different colours or materials, with the colour or material boundary line (15) running along the boundary of the opening region, with one of the side panels (2.1, 2.2) having a half edge curvature of the closed edges (3.1, 3.2, 3.3), while the opposite one of the side plates (2.1, 2.2) fills the opening region which arises between the edge curvatures and is bounded by a boundary (15).

4. Protective case, integrally injection-moulded in plastic by the process claimed in Claim 1 or 2, characterised in that each of the side panels (2.1, 2.2) is injection-moulded in different colours or materials, with the colour or material boundary line (15) running along the boundary of the opening region, with one of the side panels (2.1, 2.2) having a full edge curvature of the closed edges (3.1, 3.2, 3.3), while the opposite one of the side plates (2.1, 2.2) fills the opening region which arises between the edge curvatures and is bounded by a boundary (15).

5. Process for manufacturing a protective case for a vending machine card, cheque card, credit card or other card, of which the upper and lower side panels made of rigid plastic material are integrally injection-moulded and joined on three sides, and the fourth side, one of the ends, has an insertion and withdrawal opening, the protective case having means to facilitate sliding the card out, e.g. in the form of a gripping opening or a thumb indentation and with the protective case being able to be stripped from the thin core forming the pocket-shaped cavity or the slider forming the pocket-shaped cavity being able to be withdrawn after the injection moulding operation, and the protective case being of fully continuous construction apart from the gripping opening or the thumb indentation as well as any ventilation holes present, characterised in that the lower and upper side panels (2.1, 2.2) of the protective case (1) are simultaneously fully continuously injection-moulded from the plastic right into the side edge zones in such a way that the inflowing plastic material flows symmetrically around the core which forms the cavity and the side panels adjoining each other (2.1, 2.2) form the integrally injection-moulded protective case (1), with the injection point/s (7; 7') on the crest of the closed side edge (3.3) lying opposite the insertion and withdrawal opening (5) being located in the middle thereof or symmetrically in relation thereto.

6. Protective case, integrally injection-moulded by the process claimed in Claim 5, characterised in that the pocket-shaped cavity (6) of the protective case (1) is so constructed in the region of the injection point/s (7; 7') that the flow is directed in such a way that developing a back pressure, it dynamically supports the core or the slider (as the case may be), by which means an inner face (9) lying obliquely in relation to the longitudinal direction of the protective case is formed, the gradient of which is a minimum of 5° and a maximum of 14° and is such that the oblique face (9) sloping towards one of the side panels (2.1) clamps and secures the inserted card.

7. Protective case as claimed in any one of Claims 3, 4 or 6, characterised in that the pocket-shaped cavity (6) of the protective case (1) has at least one region (15) formed parallel to the direction of insertion of the card, either on one or on both side panels (2.1, 2.2), to form a protective channel (10) for the card's magnetic or signature strip, preferably in the form of a slight additional wedge shape in relation to the wedge shape necessary for demoulding.

8. Protective case as claimed in Claim 7, characterised in that the wedge-shaped region (15) is located correspondingly with the magnetic strip or signature line on the card.

9. Protective case as claimed in Claim 7 or 8, characterised in that the protective channel (10) formed by at least one wedge-shaped region (15) is so shaped that the leading edge of the inserted card can be gripped and clamped.

10. Protective case as claimed in any one of Claims 3, 4 or 6 to 9, characterised in that at least one of the side panels (2.1, 2.2) has a projection (14) extending in the direction of insertion which juts into the pocket-shaped cavity (6) of the protective case (1), the extension of which projection in the longitudinal direction is small in relation to the longitudinal extension of the protective case (1) and the width of which is small in relation to its longitudinal extension.

11. Protective case as claimed in Claim 10, characterised in that this projection/these projections (14) is/are provided in the region of the closed end of the protective case (1).

12. Protective case as claimed in Claim 10, characterised in that this projection/these projections (14) is/are provided in the region of the open end of the protective case (1) equipped with the insertion/withdrawal opening (5).

13. Protective case as claimed in Claim 10, 11 or 12, characterised in that the single projection provided (11) is located in the centre inside the pocket-shaped cavity (6) and the double projections provided (11) are located symmetrically about the centre therein.

14. Protective case as claimed in any one of Claims 10 to 13, characterised in that the height of the projection (11) above the inner face of the side panel (2.1, 2.2) provided with the projection (11) rises in the direction of insertion in such a way that the inserted card is progressively clamped tighter and tighter.

## Revendications

1. Procédé pour fabriquer un étui de protection pour une carte pour distributeur automatique, bancaire, de crédit ou autre, dont les plaques latérales supérieure et inférieure sont moulées en une seule pièce en une matière plastique rigide à la flexion et sont reliées entre elles sur trois côtés, tandis que le quatrième côté, l'un des côtés d'extrémité, présente une ouverture d'introduction et d'extraction, l'étui de protection présentant des moyens pour faciliter l'extraction de la carte, par exemple sous la forme d'une ouverture de manipulation ou d'une encoche de pouce, l'étui de protection pouvant, après le moulage, être séparé du noyau mince qui moule la cavité en forme de poche, ou bien le coulisseau qui moule la cavité en forme de poche pouvant être retiré après le moulage, et l'étui de protection étant construit de façon totalement continue, à l'exception de l'ouverture de manipulation ou de l'encoche de pouce, ainsi que d'ouvertures de ventilation présentes, caractérisé en ce que les plaques latérales (2.1, 2.2) sont moulées dans la matière plastique, de façon totalement continue, jusque dans les régions des bords d'extrémité, dans des temps décalés et en ce que, dans le premier temps, une des plaques latérales est tout d'abord moulée avec une région ouverte, tandis que, dans un deuxième temps, la plaque latérale opposée est moulée dans cette région ouverte, les plaques latérales (2.1, 2.2) qui sont adjacentes l'une à l'autre dans la zone des régions de bord assemblées l'une à l'autre, formant l'étui de protection (1) moulé en une seule pièce.

2. Procédé selon la revendication 1, caractérisé en ce que, dans la fabrication de l'étui de protection (1) par moulage sur une machine à mouler à plusieurs couleurs, le côté d'extrémité (3.3) qui est à l'opposé de l'ouverture de réception et d'extraction (5) est fermé, les plaques latérales (2.1, 2.2) étant moulées, soit en une seule couleur, soit en plusieurs couleurs différentes pour former l'étui de protection en une seule pièce (1).

3. Etui de protection, moulé en une seule pièce en une matière plastique par le procédé selon la revendication 1 ou 2, caractérisé en ce que les plaques latérales (2.1, 2.2) sont respectivement moulées en différentes couleurs ou en différentes matières, la ligne de limitation des couleurs ou des matières (15) s'étendant dans la limite de la région ouverte, une des plaques latérales (2.1, 2.2) présentant une moitié de l'arrondi des bords fermés (3.1, 3.2, 3.3), tandis que celle des plaques latérales (2.1, 2.2) qui est à l'opposé remplit la région ouverte formée entre les arrondis des bords et qui est limitée par une limite (15).

4. Etui de protection, moulé en une seule pièce en matière plastique par le procédé selon la revendication 1 ou 2, caractérisé en ce que les plaques latérales (2.1, 2.2) sont moulées en différentes couleurs ou différentes matières, la ligne de limitation des couleurs ou des matières (15) s'étendant dans la limite de la région ouverte, une des plaques latérales (2.1 ; 2.2) présentant un arrondi complet des bords fermés (3.1, 3.2, 3.3), tandis que celle des plaques latérales (2.1, 2.2) qui lui est opposée remplit la région ouverte formée entre les arrondis des bords qui est limitée par une limite (15).

5. Procédé pour fabriquer un étui de protection pour une carte de distributeur automatique, bancaire, de crédit ou autre, dont les plaques latérales supérieure et inférieure sont moulées en une seule pièce en une matière plastique rigide à la flexion et sont reliées entre elles sur trois côtés, tandis que le quatrième côté, l'un des côtés d'extrémité, présente une ouverture d'introduction et d'extraction, l'étui de protection présentant des moyens pour faciliter l'extraction de la carte, par exemple sous la forme d'une ouverture de manipulation ou d'une encoche de pouce, l'étui de protection pouvant, après le moulage, être séparé du noyau mince qui moule la cavité en forme de poche, ou bien le coulisseau qui moule la cavité en forme de poche pouvant être retiré après le moulage, et l'étui de protection étant construit de façon totalement continue, à l'exception de l'ouverture de manipulation ou de l'encoche de pouce, ainsi que d'ouvertures de ventilation présentes, caractérisé en ce que la plaque latérale inférieure et la plaque latérale supérieure (2.1, 2.2) de l'étui de protection (1) sont moulées simultanément dans la matière plastique, de façon totalement continue, jusque dans les régions des bords latéraux, de telle manière que la masse de matière plastique entrante s'écoule symétriquement autour du noyau qui moule la cavité et que les plaques latérales (2.1, 2.2) mutuellement adjacentes forment l'étui de protection (1) moulé en une seule pièce, le ou, respectivement, les point(s) d'injection (7 ; 7') se trouvant sur le sommet du bord latéral (3.3) fermé, qui est à l'opposé de l'ouverture d'introduction et d'extraction (5), soit en son centre, soit symétriquement par rapport à ce centre.

6. Etui de protection, moulé en une seule pièce en matière plastique par le procédé selon la revendication 5, caractérisé en ce que, dans la région du ou des points d'injection (7 ; 7'), la cavité (6) en forme de poche de l'étui de protection (1) est formée de manière que l'écoulement soit dirigé de façon à soutenir dynamiquement le noyau ou le coulisseau en établissant une contre-pression, de sorte qu'il se forme une surface intérieure (9) s'étendant obliquement par rapport à la direction longitudinale de l'étui de protection, et dont la pente est de 5° au minimum et de 14° au maximum, et telle que la surface oblique (9), étant inclinée vers une des plaques latérales (2.1), immobilise la carte introduite en la coinçant.

7. Etui de protection selon une des revendications 3 ou 4 à 6, caractérisé en ce que la cavité (6) en forme de poche de l'étui de protection (1) présente au moins une région (15) venue de moulage, parallèle à la direction d'introduction de la carte, soit sur l'une, soit sur chacune des deux plaques latérales (2.1, 2.2) pour former un canal de protection (10) pour la bande magnétique ou de signature de la carte, de préférence constitué par une forme de coin additionnelle à faible pente comparativement à la forme de coin nécessaire pour le démoulage.

8. Etui de protection selon la revendication 7, caractérisé en ce que la région en forme de coin (15) est disposée pour correspondre à la bande magnétique ou aux lignes de signature prévues sur la carte.

9. Etui de protection selon la revendication 7 ou 8, caractérisé en ce que le canal de protection (10) formé par au moins une région en forme de coin (15), est d'une forme telle que le bord débordant de la carte introduite peut être serré avec effet de coincement.

10. Etui de protection selon une des revendications 3 ou 4 ou 6 à 9, caractérisé en ce qu'au moins une des plaques latérales (2.1 ; 2.2) présente un bossage (14) qui fait saillie dans la cavité (6) en forme de poche de l'étui de protection (1), qui s'étend dans la direction d'introduction et dont la dimension dans la direction de la longueur est petite comparativement à la dimension longitudinale de l'étui de protection (1) et dont la largeur est petite comparativement à sa dimension longitudinale.

11. Etui de protection selon la revendication 10, caractérisé en ce que ce ou ces bossage(s) (14) est ou sont prévu(s) dans la région de l'extrémité fermée de l'étui de protection (1).

12. Etui de protection selon la revendication 10, caractérisé en ce que ce ou ces bossage(s) (14) est ou sont prévu(s) dans la région de l'extrémité ouverte de l'étui de protection (1) qui est munie de l'ouverture d'introduction/extraction (5).

13. Etui de protection selon la revendication 10, 11 ou 12, caractérisé en ce que le bossage (11) prévu en un seul exemplaire est disposé en position centrale, ou encore les bossages (11) prévus en double sont disposés symétriquement par rapport au centre, à l'intérieur de la cavité (6) en forme de poche.

14. Etui de protection selon une des revendications 10 à 13, caractérisé en ce que la hauteur du bossage (11) au-dessus de la surface intérieure de la plaque latérale (2.1 ; 2.2) munie du bossage (11) augmente dans la direction de l'introduction, de telle sorte que le coincement de la carte introduite croît progressivement.
